# EUROPEAN PATENT SPECIFICATION

(11) **EP 2 668 315 B1**
(45) Date of publication and mention of the grant of the patent: **19.07.2017**
(21) Application number: 12701115.3
(22) Date of filing: 25.01.2012
(51) Int. Cl.: C25B 1/02, C25B 11/04, C25C 7/02

(54) **ELECTRODE FOR OXYGEN EVOLUTION IN INDUSTRIAL ELECTROCHEMICAL PROCESSES**
ELEKTRODE FÜR SAUERSTOFFENTWICKLUNG IN INDUSTRIELLEN ELEKTROCHEMISCHEN VERFAHREN
ÉLECTRODE POUR DÉGAGEMENT D'OXYGÈNE DANS DES PROCÉDÉS ÉLECTROCHIMIQUES INDUSTRIELS

(30) Priority: 26.01.2011 IT MI20110089
(43) Date of publication of application: 04.12.2013
(73) Proprietor: Industrie De Nora S.P.A., 20134 Milano (IT)
(72) Inventor: CALDERARA, Alice, I-26020 Agnadello (CR) (IT); SALA, Fabio, I-20019 Settimo Milanese (Milano) (IT); TIMPANO, Fabio, I-20832 Desio (MB) (IT)
(74) Representative: Reitstötter Kinzebach
(86) International application number: PCT/EP2012/051079
(87) International publication number: WO 2012/101141

(56) References cited:
- JP-A- 5 287 572
- US-A- 5 156 726
- US-A- 5 578 176
- US-A1- 2001 042 682
- US-A1- 2005 211 553

## Description

### FIELD OF THE INVENTION

The invention relates to an electrode suitable for operating as anode in electrochemical cells, for instance as oxygen-evolving anode in electrolysis cells for electrometallurgical processes.

### BACKGROUND OF THE INVENTION

The invention relates to an electrode for use in industrial electrochemical processes, for instance in electrolytic applications contemplating the evolution of oxygen at the anode. Anodes for oxygen evolution are widely used in different electrolysis applications, several of which pertain to the field of electrometallurgy, covering a wide range in terms of applied current density, which can be very reduced (for instance a few hundred A/m², such as the case of electrowinning processes) or also very high (for instance in high speed electroplating, which can operate in excess of 10 kA/m², referred to the anodic surface); another field of application of oxygen-evolving anodes is cathodic protection under impressed current. Electrodes suitable for anodic evolution of oxygen can be obtained starting from substrates of valve metals, for instance titanium and alloys thereof, coated with catalytic compositions based on transition metals or oxides thereof, characterised by their capability of lowering the overvoltage of the oxygen anodic discharge reaction, which is much too high to allow the execution of industrial processes in the absence of catalytic systems. A composition suitable for catalysing the anodic oxygen evolution reaction for instance consists of a mixture of oxides of iridium and of tantalum, wherein iridium plays the role of catalytically active species and tantalum facilitates the formation of a compact coating, capable of protecting the valve metal substrate from corrosion phenomena, especially when operating with aggressive electrolytes. An anode formulation suitable for anodic oxygen evolution in many industrial electrochemical processes comprises a titanium substrate and a catalytic coating consisting of oxides of iridium and tantalum with a molar composition referred to the metals of 65% Ir and 35% Ta. In some cases, for instance to be able to operate with very acidic or otherwise corrosive electrolytes, it can be advantageous to interpose an intermediate protective layer between titanium substrate and catalytic coating, for instance consisting of titanium and tantalum oxides with a molar composition of 80% Ti and 20% Ta referred to the metals. This type of electrodes can be prepared in different ways, for example by thermal decomposition of a precursor solution at high temperature, for instance 400 to 600°C. Electrodes with the above specified composition can satisfy the needs of several industrial applications, both at low and at high current density, with reasonable operative lifetimes. The economy of some manufacturing processes, especially in the field of metallurgy (for instance copper deposition in galvanic processes for the production of printed circuits and copper foil) nevertheless requires electrodes of increasingly high duration, combined with a suitably reduced oxygen evolution potential even at high current density: the potential of oxygen evolution is in fact one of the main factors determining the process operative voltage and thus the overall energy consumption. Moreover, the operative lifetime of anodes based on noble metals or oxides thereof on valve metal substrates is remarkably reduced in the presence of particularly aggressive contaminants, which can establish accelerated phenomena of corrosion or of anode surface pollution. It has therefore been evidenced the need for oxygen-evolving anodes characterised by a low oxygen evolution overpotential and by higher operative lifetimes even in particularly critical process conditions, such as a high current density or the presence of particularly aggressive electrolytes, for instance due to the presence of contaminant species.

### SUMMARY OF THE INVENTION

Various aspects of the invention are set out in the accompanying claims.

In one embodiment, the present invention relates to an electrode for oxygen evolution in electrochemical processes comprising a valve metal substrate, a catalytic coating comprising an internal layer of oxides of iridium and tantalum of molar composition Ir 60-70%, Ta 30-40% referred to the metals and an external coating containing 2 to 7 g/m² of a valve metal oxide, wherein said valve metal oxide is selected from the group consisting of tantalum oxide, tin oxide and zirconium oxide. For the purpose of the invention, by valve metal oxide it is intended herein a metal which, when oxidized, allows current to pass if used as a cathode but opposes the flow of current when used as an anode, according to the definition set forth in US 6,287,673. Examples of valve metals include magnesium, thorium, cadmium, tungsten, tin, iron, silver, silicon, tantalum, titanium, aluminium, zirconium and niobium. According to the invention, the external coating consists of a single valve metal oxide selected from oxides of tantalum, or of tin, or of zirconium. This can have the advantage of preserving the valve metal behaviour of the external layer, since the interaction of the valve metal of the external layer with another element of different valence could bring about a doping effect and hamper the opposition to the anodic current flow.

The inventors have surprisingly observed that the addition of an external coating of the oxides of tantalum, or of tin, or of zirconium at the specified loading is capable of remarkably increasing the duration of an electrode used for anodic evolution of oxygen, meanwhile improving its tolerance to the presence of contaminating species, with little effect on the oxygen evolution potential.

In one embodiment, the catalytic coating consists of multiple layers and comprises also a second intermediate layer of oxides of iridium, tantalum and titanium of molar composition Ir 76-84%, Ta 15-23%, Ti 0.2-1.3% referred to the metals, interposed between the first catalytic layer and the external layer. This can have the advantage of further enhancing the electrode duration.

In one embodiment, the specific loading of iridium in the catalytic layer is 5 to 50 g/m². In one embodiment the specific loading of oxides in the external layer of the catalytic layer according to the invention is 2.9 to 3.5 g/m². This can have the advantage of ensuring that the effect on the oxygen evolution potential becomes negligible or nil.

In one embodiment the electrode comprises an intermediate protection layer based on oxides of titanium or of tantalum interposed between the substrate and the catalytic coating.

Under another aspect, the invention relates to a method of manufacturing of an electrode with the above described characteristics, comprising the formation of an external layer having a composition as hereinbefore described, by application and subsequent thermal decomposition of a solution containing a precursor of tantalum or tin or zirconium.

Under another aspect, the invention relates to an industrial electrochemical process comprising the anodic evolution of oxygen from an electrolytic bath on an electrode having the above described characteristics.

Some of the most significant results obtained by the inventors are presented in the following examples, which are not intended as a limitation of the domain of the invention.

### EXAMPLE 1

A titanium sheet grade 1 of 200 x 200 x 3 mm size was degreased and subjected first to sandblasting with iron grit until obtaining a value of superficial roughness Rz of 70 to 100 µm, then to etching in 20% by weight HCl at a temperature of 90-100°C for 20 minutes.

After drying, a protective layer based on titanium and tantalum oxides at a 80:20 weight ratio was applied to the sheet, with an overall loading of 0.6 g/m² referred to the metals (equivalent to 0.87 g/m² referred to the oxides). The application of the protective layer was carried out by painting in three coats of a precursor solution - obtained by addition of an aqueous TaCl5 solution, acidified with HCl, to an aqueous solution of TiCl4 - and subsequent thermal decomposition at 500°C.

A catalytic coating based on oxides of iridium and tantalum at a 65:35 weight ratio (equivalent to a molar ratio of about 66.3:36.7) was then applied on the protective layer, with an overall loading of iridium of 10 g/m².

The electrode was thermally treated for 2 h at 515°C, then the application of the external coating (3g/m² referred to the oxides) was carried out by painting in 2 coats of an aqueous solution of TaCl5, acidified with HCl.

Three samples of 1 cm² surface were cut out from the thus obtained electrode and submitted to an accelerated lifetime test under anodic oxygen evolution, measuring the deactivation time (defined as the operating time required to observe a potential increase of 1 V) in H2SO4 at 150 g/l, at a temperature of 60°C and at a current density of 30 kA/m².

The average deactivation time for the three samples was 1370 hours.

### EXAMPLE 2

A titanium sheet grade 1 of 200 x 200 x 3 mm size was degreased and subjected first to sandblasting with iron grit until obtaining a value of superficial roughness Rz of 70 to 100 µm, then to etching in 20% by weight HCl at a temperature of 90-100°C for 20 minutes.

After drying, a protective layer based on titanium and tantalum oxides at a 80:20 weight ratio was applied to the sheet, with an overall loading of 0.6 g/m² referred to the metals (equivalent to 0.87 g/m² referred to the oxides). The application of the protective layer was carried out by painting in three coats of a precursor solution - obtained by addition of an aqueous TaCl5 solution, acidified with HCl, to an aqueous solution of TiCl4 - and subsequent thermal decomposition at 500°C.

A catalytic coating based on oxides of iridium and tantalum at a 65:35 weight ratio (equivalent to a molar ratio of about 66.3:36.7) was then applied on the protective layer, with an overall loading of iridium of 10 g/m². The electrode was thermally treated for 2 h at 515°C, then the application of the external coating (3.4 g/m² referred to the oxides) was carried out by painting in 2 coats of a 0.9 M acetic solution of Sn.

Three samples of 1 cm² surface were cut out from the thus obtained electrode and submitted to an accelerated lifetime test under anodic oxygen evolution, measuring the deactivation time (defined as the operating time required to observe a potential increase of 1 V) in H2SO4 at 150 g/l, at a temperature of 60°C and at a current density of 30 kA/m².

The average deactivation time for the three samples was 1440 hours.

### EXAMPLE 3

A titanium sheet grade 1 of 200 x 200 x 3 mm size was degreased and subjected first to sandblasting with iron grit until obtaining a value of superficial roughness Rz of 70 to 100 µm, then to etching in 20% by weight HCl at a temperature of 90-100°C for 20 minutes.

After drying, a protective layer based on titanium and tantalum oxides at a 80:20 weight ratio was applied to the sheet, with an overall loading of 0.6 g/m² referred to the metals (equivalent to 0.87 g/m² referred to the oxides). The application of the protective layer was carried out by painting in three coats of a precursor solution - obtained by addition of an aqueous TaCl5 solution, acidified with HCl, to an aqueous solution of TiCl4 - and subsequent thermal decomposition at 500°C.

A catalytic coating consisting of two distinct layers was then applied on the protective layer: a first (internal) layer based on oxides of iridium and tantalum in a 65:35 weight ratio (equivalent to a molar ratio of about 66.3:36.7), with an overall loading of iridium of 2 g/m², and a second (external) layer based on oxides of iridium, tantalum and titanium, at a 78:20:2 weight ratio (corresponding to a molar ratio of about 80.1:19.4:0.5), with an overall loading of iridium of 10 g/m².

The application of the internal catalytic layer was carried out by painting in 2 coats of a precursor solution - obtained by addition of H2IrCl6 to an aqueous TaCl5 solution, until reaching an Ir concentration of 76 g/l - and subsequent thermal decomposition at 520°C.

The application of the external catalytic layer was carried out by painting in 4 coats of a precursor solution - obtained by addition of an aqueous TaCl5 solution, acidified with HCl, to an aqueous solution of TiCl4, then of H2IrCl6 until reaching an Ir concentration of 195 g/l - and subsequent thermal decomposition at 480°C. The electrode was thermally treated for 2 h at 515°C, then the application of the external coating (3g/m² referred to the oxides) was carried out by painting in 2 coats of an aqueous solution of TaCl5, acidified with HCl.

Three samples of 10 cm² surface were cut out from the thus obtained electrode and submitted to an accelerated lifetime test under anodic oxygen evolution, measuring the deactivation time (defined as the operating time required to observe a potential increase of 1 V) in H2SO4 at 150 g/l, at a temperature of 60°C and at a current density of 30 kA/m².

The average deactivation time for the three samples was 2420 hours.

### EXAMPLE 4

A titanium sheet grade 1 of 200 x 200 x 3 mm size was degreased and subjected first to sandblasting with iron grit until obtaining a value of superficial roughness Rz of 70 to 100 µm, then to etching in 20% by weight HCl at a temperature of 90-100°C for 20 minutes.

After drying, a protective layer based on titanium and tantalum oxides at a 80:20 weight ratio was applied to the sheet, with an overall loading of 0.6 g/m² referred to the metals (equivalent to 0.87 g/m² referred to the oxides). The application of the protective layer was carried out by painting in three coats of a precursor solution - obtained by addition of an aqueous TaCl5 solution, acidified with HCl, to an aqueous solution of TiCl4 - and subsequent thermal decomposition at 500°C.

A catalytic coating consisting of two distinct layers was then applied on the protective layer: a first (internal) layer based on oxides of iridium and tantalum in a 65:35 weight ratio (equivalent to a molar ratio of about 66.3:36.7), with an overall loading of iridium of 2 g/m², and a second (external) layer based on oxides of iridium, tantalum and titanium, at a 78:20:2 weight ratio (corresponding to a molar ratio of about 80.1:19.4:0.5), with an overall loading of iridium of 10 g/m².

The application of the internal catalytic layer was carried out by painting in 2 coats of a precursor solution - obtained by addition of H2IrCl6 to an aqueous TaCl5 solution, until reaching an Ir concentration of 76 g/l - and subsequent thermal decomposition at 520°C.

The application of the external catalytic layer was carried out by painting in 4 coats of a precursor solution - obtained by addition of an aqueous TaCl5 solution, acidified with HCl, to an aqueous solution of TiCl4, then of H2IrCl6 until reaching an Ir concentration of 195 g/l - and subsequent thermal decomposition at 480°C. The electrode was thermally treated for 2 h at 515°C, then the application of the external coating (3.4 g/m² referred to the oxides) was carried out by painting in 2 coats of a 0.9 M acetic solution of Sn.

Three samples of 10 cm² surface were cut out from the thus obtained electrode and submitted to an accelerated lifetime test under anodic oxygen evolution, measuring the deactivation time (defined as the operating time required to observe a potential increase of 1 V) in H2SO4 at 150 g/l, at a temperature of 60°C and at a current density of 30 kA/m².

The average deactivation time for the three samples was 1800 hours.

### COUNTEREXAMPLE 1

A titanium sheet grade 1 of 200 x 200 x 3 mm size was degreased and subjected first to sandblasting with iron grit until obtaining a value of superficial roughness Rz of 70 to 100 µm, then to etching in 20% by weight HCl at a temperature of 90-100°C for 20 minutes.

After drying, a protective layer based on titanium and tantalum oxides at a 80:20 weight ratio was applied to the sheet, with an overall loading of 0.6 g/m² referred to the metals (equivalent to 0.87 g/m² referred to the oxides). The application of the protective layer was carried out by painting in three coats of a precursor solution - obtained by addition of an aqueous TaCl5 solution, acidified with HCl, to an aqueous solution of TiCl4 - and subsequent thermal decomposition at 500°C.

A catalytic coating based on oxides of iridium and tantalum at a 65:35 weight ratio (equivalent to a molar ratio of about 66.3:36.7) was then applied on the protective layer, with an overall loading of iridium of 10 g/m².
Three samples of 1 cm² surface were cut out from the thus obtained electrode and submitted to an accelerated lifetime test under anodic oxygen evolution, measuring the deactivation time (defined as the operating time required to observe a potential increase of 1 V) in H2SO4 at 150 g/l, at a temperature of 60°C and at a current density of 30 kA/m².

The average deactivation time for the three samples was 660 hours.

### COUNTEREXAMPLE 2

A titanium sheet grade 1 of 200 x 200 x 3 mm size was degreased and subjected first to sandblasting with iron grit until obtaining a value of superficial roughness Rz of 70 to 100 µm, then to etching in 20% by weight HCl at a temperature of 90-100°C for 20 minutes.

After drying, a protective layer based on titanium and tantalum oxides at a 80:20 weight ratio was applied to the sheet, with an overall loading of 0.6 g/m² referred to the metals (equivalent to 0.87 g/m² referred to the oxides). The application of the protective layer was carried out by painting in three coats of a precursor solution - obtained by addition of an aqueous TaCl5 solution, acidified with HCl, to an aqueous solution of TiCl4 - and subsequent thermal decomposition at 500°C.

A catalytic coating consisting of two distinct layers was then applied on the protective layer: a first (internal) layer based on oxides of iridium and tantalum in a 65:35 weight ratio (equivalent to a molar ratio of about 66.3:36.7), with an overall loading of iridium of 2 g/m², and a second (external) layer based on oxides of iridium, tantalum and titanium, at a 78:20:2 weight ratio (corresponding to a molar ratio of about 80.1:19.4:0.5), with an overall loading of iridium of 10 g/m².

The application of the internal catalytic layer was carried out by painting in 2 coats of a precursor solution - obtained by addition of H2IrCl6 to an aqueous TaCl5 solution, until reaching an Ir concentration of 76 g/l - and subsequent thermal decomposition at 520°C.

The application of the external catalytic layer was carried out by painting in 4 coats of a precursor solution - obtained by addition of an aqueous TaCl5 solution, acidified with HCl, to an aqueous solution of TiCl4, then of H2IrCl6 until reaching an Ir concentration of 195 g/l - and subsequent thermal decomposition at 480°C.

Three samples of 10 cm² surface were cut out from the thus obtained electrode and submitted to an accelerated lifetime test under anodic oxygen evolution, measuring the deactivation time (defined as the operating time required to observe a potential increase of 1 V) in H2SO4 at 150 g/l, at a temperature of 60°C and at a current density of 30 kA/m².

The average deactivation time for the three samples was 1320 hours.

The previous description shall not be intended as limiting the invention, which may be used according to different embodiments without departing from the scopes thereof, and whose extent is univocally defined by the appended claims.

Throughout the description and claims of the present application, the term "comprise" and variations thereof such as "comprising" and "comprises" are not intended to exclude the presence of other elements or additives.

The discussion of documents, acts, materials, devices, articles and the like is included in this specification solely for the purpose of providing a context for the present invention. It is not suggested or represented that any or all of these matters formed part of the prior art base or were common general knowledge in the field relevant to the present invention before the priority date of each claim of this application.

## Claims

1. Electrode for oxygen evolution in electrochemical processes comprising a valve metal substrate, a catalytic coating comprising a first layer of oxides of iridium and tantalum having a molar composition Ir 60-70%, Ta 30-40% referred to the metals and an external coating consisting of 2 to 7 g/m² of a single valve metal oxide, wherein said valve metal oxide is selected from the group consisting of tantalum oxide, tin oxide and zirconium oxide.

2. The electrode according to claim 1 wherein said external coating consists of 2.9 to 3.5 g/m² of a valve metal oxide selected between tantalum oxide, tin oxide and zirconium oxide.

3. The electrode according to any one of claims 1 to 2 wherein said catalytic coating further comprises a second layer of oxides of iridium, tantalum and titanium having a molar composition Ir 76-84%, Ta 15-23%, Ti 0.2-1.3% referred to the metals interposed between said first catalytic layer and said external coating.

4. The electrode according to any one of claims 1 to 3 wherein said catalytic coating has a specific loading of iridium of 5 to 50 g/m².

5. The electrode according to any one of claims 1 to 4 comprising an intermediate protective layer based on oxides of titanium or tantalum interposed between said substrate and said catalytic coating.

6. The electrode according to claim 5 wherein said catalytic coating has a specific loading of iridium of 8 to 15 g/m².

7. Method of manufacturing an electrode according to any one of claims 1 to 6 comprising the formation of said external coating by application and subsequent thermal decomposition of a solution containing a precursor of tantalum or tin or zirconium.

8. Industrial electrochemical process comprising the anodic evolution of oxygen from an electrolytic bath on an electrode according to any one of claims 1 to 6.

## Patentansprüche

1. Elektrode zur Sauerstoffentwicklung in elektrochemischen Prozessen mit einem Ventilmetallsubstrat, einer katalytischen Beschichtung, die eine erste Schicht aus Iridium- und Tantaloxiden mit einer molaren Zusammensetzung von 60-70% Ir, 30-40% Ta bezogen auf die Metalle umfasst, und einer äußeren Beschichtung, die aus 2 bis 7 g/m² eines einzigen Ventilmetalloxids besteht, wobei das Ventilmetalloxid ausgewählt ist aus der Gruppe bestehend aus Tantaloxid, Zinnoxid und Zirkonoxid.

2. Elektrode gemäß Anspruch 1, wobei die äußere Beschichtung aus 2,9 bis 3,5 g/m² eines Ventilmetalloxids besteht, das ausgewählt ist aus Tantaloxid, Zinnoxid und Zirkonoxid.

3. Elektrode gemäß einem der Ansprüche 1 bis 2, wobei die katalytische Beschichtung außerdem eine zweite Schicht aus Iridium-, Tantal- und Titanoxiden mit einer molaren Zusammensetzung von 76-84% Ir, 15-23% Ta und 0,2-1,3% Ti bezogen auf die Metalle umfasst, die zwischen der ersten katalytischen Schicht und der äußeren Beschichtung angeordnet ist.

4. Elektrode gemäß einem der Ansprüche 1 bis 3, wobei die katalytische Beschichtung eine spezifische Iridiumbeladung von 5 bis 50 g/m² aufweist.

5. Elektrode gemäß einem der Ansprüche 1 bis 4, die eine auf Titan- oder Tantaloxiden basierende Zwischenschutzschicht umfasst, die zwischen dem Substrat und der katalytischen Beschichtung angeordnet ist.

6. Elektrode gemäß Anspruch 5, wobei die katalytische Beschichtung eine spezifische Iridiumbeladung von 8 bis 15 g/m² aufweist.

7. Verfahren zur Herstellung einer Elektrode gemäß einem der Ansprüche 1 bis 6, welches die Bildung der äußeren Beschichtung durch Auftragen und anschließende thermische Zersetzung einer Lösung umfasst, die eine Vorläufersubstanz von Tantal oder Zinn oder Zirkon enthält.

8. Industrielles elektrochemisches Verfahren umfassend die anodische Sauerstoffentwicklung aus einem elektrolytischen Bad an einer Elektrode gemäß einem der Ansprüche 1 bis 6.

## Revendications

1. Électrode de dégagement d'oxygène pour des processus électrochimiques, comprenant un substrat métallique de valve, un revêtement catalytique comprenant une première couche d'oxydes d'iridium et de tantale présentant une composition molaire comprenant de 60 à 70 % d'Ir et de 30 à 40 % de Ta, en faisant référence aux métaux, et un revêtement externe composé de 2 à 7 g/m² d'un oxyde métallique de valve unique, ledit oxyde métallique de valve étant sélectionné dans le groupe composé de l'oxyde de tantale, de l'oxyde d'étain et de l'oxyde de zirconium.

2. Électrode selon la revendication 1, dans laquelle ledit revêtement externe se compose de 2,9 à 3,5 g/m² d'un oxyde métallique de valve sélectionné parmi l'oxyde de tantale, l'oxyde d'étain et l'oxyde de zirconium.

3. Électrode selon l'une quelconque des revendications 1 à 2, dans laquelle ledit revêtement catalytique comprend en outre une seconde couche d'oxydes d'iridium, de tantale et de titane présentant une composition molaire comprenant de 76 à 84 % d'Ir, 15 à 23 % de Ta, 0,2 à 1,3 % de Ti, en faisant référence aux métaux interposés entre ladite première couche catalytique et ledit revêtement externe.

4. Électrode selon l'une quelconque des revendications 1 à 3, dans laquelle ledit revêtement catalytique présente une charge spécifique en iridium de 5 à 50 g/m².

5. Électrode selon l'une quelconque des revendications 1 à 4, comprenant une couche intermédiaire protectrice à base d'oxydes de titane ou de tantale interposée entre ledit substrat et ledit revêtement catalytique.

6. Électrode selon la revendication 5, dans laquelle ledit revêtement catalytique présente une charge spécifique en iridium de 8 à 15 g/m².

7. Procédé de fabrication d'une électrode selon l'une quelconque des revendications 1 à 6, comprenant la formation dudit revêtement externe par application et décomposition thermique ultérieure d'une solution contenant un précurseur de tantale ou d'étain ou de zirconium.

8. Processus électrochimique industriel comprenant le dégagement anodique d'oxygène à partir d'un bain électrolytique sur une électrode selon l'une quelconque des revendications 1 à 6.
